# EUROPEAN PATENT APPLICATION

(11) **EP 2 878 860 A1**
(43) Date of publication of application: **03.06.2015**
(21) Application number: 13195353.1
(22) Date of filing: 02.12.2013
(51) Int. Cl.: F16H 63/34

(54) **Parking lock assembly and transmission for a vehicle**

(71) Applicant: Transmisiones y Equipos Mecánicos, S.A. de C.V., Queretaro, 76120 (MX)
(72) Inventor: De Landtsheere, Jannick, 8310 Assebroek (BE); Genouw, Didier, 8480 Eernegem (BE)
(74) Representative: Prinz & Partner mbB

(57) **Abstract**

The invention relates to a parking lock assembly (10) for vehicles having a transmissions (12) include a parking lock (14) associated to a transmission output shaft (15) and a single electromechanical actuator (16) movable between a first actuator position and a second actuator position. The electromechanical actuator (16), when in the first actuator position, retains the parking lock mechanism (14) in a release position that allows the transmission output shaft (15) to rotate freely When the electromechanical actuator (16) is in the second actuator position, it urges the parking lock mechanism (14) towards an interlocking position that blocks a rotation of the transmission output shaft (15).

## Description

The invention relates to a parking lock assembly for vehicles having a transmission, and to a transmission including such a parking lock assembly.

The term "transmission" as used herein refers to any part which is involved in transmitting torque from a motor to wheels of a vehicle, e.g. a gear transmission (gear box), transmission shafts, a differential, etc. Nevertheless, a preferred application of the parking lock assembly is having it associated with a gear transmission.

The majority of automated vehicle transmissions contain a device that keeps the vehicle stationary when parked. These parking lock assemblies can function manually, in which case the driver operates the parking lock via a mechanical action such as the movement of a PRND-lever, or automatically. In the latter case, the driver does not physically actuate the parking lock but the parking lock assembly contains electrical, mechanical and/or hydraulic components that operate the parking lock instead. The construction of such automatic parking lock assemblies is often rather complex and includes several expensive components to ensure the safety aspect related with the parking function in all conditions.

Therefore, it is an object of the present invention to provide an automatic parking lock assembly having a simple construction and a reliable function ensuring that the parking lock remains in its required state in case the actuation sources fail.

In order to solve this object, the invention provides a parking lock assembly for vehicles having a transmission, comprising a parking lock mechanism associated to a transmission output shaft and a single electromechanical actuator movable between a first actuator position and a second actuator position, wherein the electromechanical actuator in the first actuator position retains the parking lock mechanism in a released position that allows the transmission output shaft to rotate freely and in the second actuator position urges the parking lock mechanism towards an interlocking position that blocks a rotation of the transmission output shaft, the second position of the actuator being stable.

Such a single electromechanical actuator facilitates a simple construction of the parking lock assembly and is able to ensure that the parking lock assembly remains in its required state in case of an actuator failure without the need for any redundancy provisions.

Preferably, the electromechanical actuator is a linear, self-locking actuator providing a self-locking function at least in the second actuator position and optionally also in the first actuator position. Such a self-locking function ensures that the parking lock assembly remains in its required state in case of a failure of the actuator.

In an advantageous embodiment, the parking lock assembly further includes a park-lock gear rigidly connected to the transmission output shaft being rotatable around a transmission axis, a pivotable pawl that can engage with the park-lock gear, a plunger supporting the pivotable pawl, the plunger being axially movable between a release position, in which the pawl does not engage with the park-lock gear, and an interlocking position, in which the pawl engages with the park-lock gear, as well as an axially movable actuation rod being slidably connected with the plunger, the actuation rod being connected with the electromechanical actuator. Such construction is easy to assemble and provides a reliable function of the parking lock.

In this embodiment, the plunger is preferably movable relative to the actuation rod between two axial end-stops, wherein a spring element is provided, urging the plunger towards one of the axial end-stops of the actuation rod. Upon actuation of the electromechanical actuator the actuation rod is moved in an axial direction and applies a spring load onto the plunger. This spring load ensures that the pawl is pivoted by the plunger such that the pawl engages with the park-lock gear as soon as possible.

Preferably, the electromechanical actuator is a linear actuator acting in an axial direction, wherein the electromechanical actuator and the actuation rod are interconnected by a pivotable lever. The interconnection of the electromechanical actuator and the actuation rod by a pivotable lever allows for a compact construction of the parking lock assembly, especially in an axial direction. Further, the applied force as well as the travel of the actuation rod and the linear actuator are easily adjustable by the length of the lever arm. Alternatively, the actuation rod can also be directly attached to the actuator. Such embodiment would simplify the construction of the parking lock assembly but also require a larger axial installation space.

Moreover, it is preferred to provide a position sensor to determine the axial position of the actuation rod or the plunger. Such information about the axial position of the actuation rod or the plunger can be used for various control and diagnostic purposes.

In a further embodiment of the parking lock assembly a manual override element is associated with the plunger or the actuation rod to manually move the plunger from the interlocking position into the release position. Such a manual override element facilitates to manually open the parking lock, for example during vehicle servicing or repair.

Additional features and advantages of the invention arise from the following description of a preferred embodiment with reference to the accompanying drawings, wherein:
- Figure 1 shows a front view of a parking lock assembly according to the invention;
- Figure 2 shows a front view of the parking lock assembly according to Figure 1;
- Figure 3 shows a longitudinal section 3-3 of the parking lock assembly according to Figure 2 in a release position; and
- Figure 4 shows a longitudinal section of the parking lock assembly according to Figure 2 in an interlocking position.

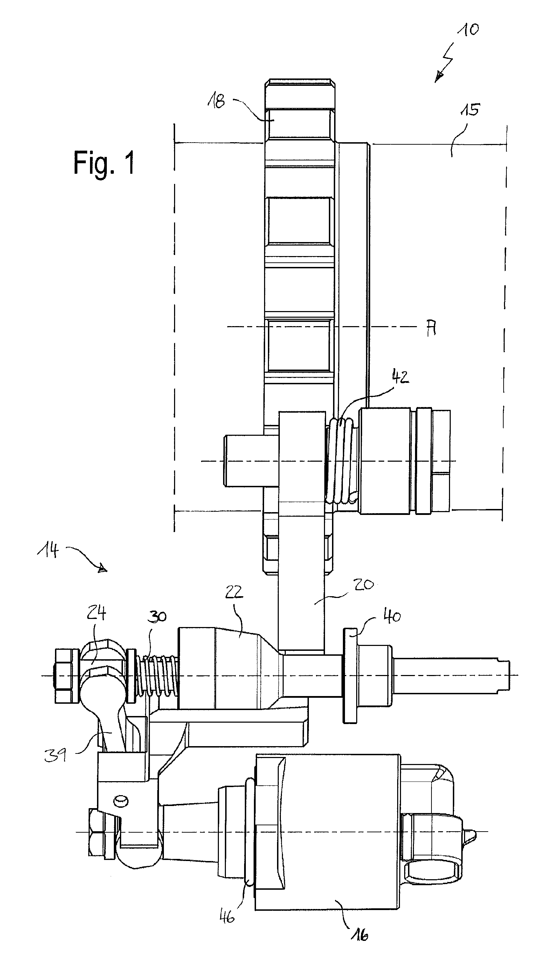

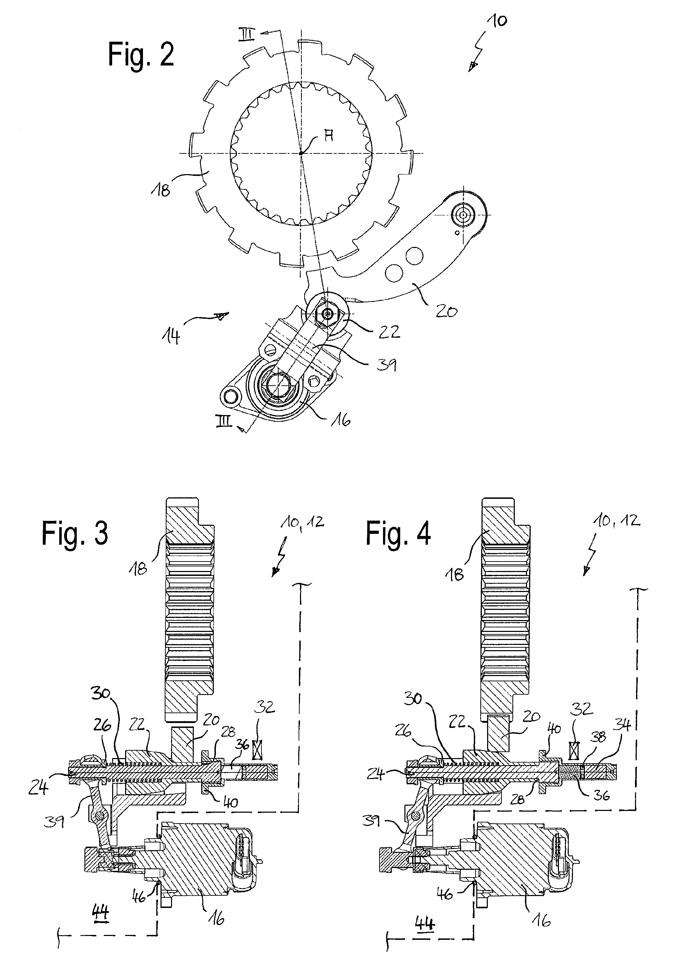

Figures 1 to 4 show an automated parking lock assembly 10 for a vehicle transmission 12, in particular for an automated transmission in which the various gears are engaged/changed by means of a control. The transmission 12 includes a parking lock mechanism 14 associated to a transmission output shaft 15 and a single electromechanical actuator 16 movable between a first actuator position (see Figure 3) and a second actuator position (see Figure 4).

When the actuator 16 is in the first actuator position, it retains the parking lock mechanism 14 in a release position that allows the transmission output shaft 15 to rotate freely around a transmission axis A. When the actuator 16 is in the second actuator position, it urges the parking lock mechanism 14 towards an interlocking position that blocks a rotation of the transmission output shaft 15 around the transmission axis A.

To this end, the transmission output shaft 15 of the automated transmission 12 is provided with a park-lock gear 18 which is connected drivingly to the output shaft 15 so as to rotate therewith around the transmission axis A. When the park lock mechanism 14 prevents rotation of the park-lock gear 18, unintended rolling of the vehicle is also prevented as the vehicle wheels with which the output shaft 15 is connected, are blocked.

The parking lock mechanism 14 of the parking lock assembly 10 includes a pivotable pawl 20 that can engage with the park-lock gear 18, and a plunger 22 which cooperates with the pivotable pawl 20. The plunger 22 is axially movable between a release position in which the pawl 20 does not engage with the park-lock gear 18, and an interlocking position in which the pawl 20 engages with the park-lock gear 18. The park lock mechanism 14 further includes an axially movable actuation rod 24 which is slidably connected with the plunger 22. The actuation rod 24 is connected with the electromechanical actuator 16 and moves between a release position (when the actuator 16 is in the first position) and the interlocking position (when the actuator 16 is in the second position).

The plunger 22 is movable relative to the actuation rod 24 between two axial end-stops 26, 28. A spring element 30 is provided which urges the plunger 22 towards the axial end-stop 28 of the actuation rod 24. Further, a torsional spring 42 is provided which biases the pawl 20 against the plunger 22 and away from the park-lock gear 18.

As shown in Figures 3 and 4, the parking lock assembly 10 also includes a position sensor 32 to determine the axial position of the actuation rod 24. In Figures 3 and 4 the position sensor 32 is a magnetic position sensor 32 including a permanent magnet 34 that is associated with the actuation rod 24. Here, the permanent magnet 34 is mounted on the actuation rod. It can however be associated therewith in any other way, e.g. by indirectly mounting it thereto.

The position sensor 32 senses a change on the magnetic which is a result of a movement of the magnet when the park lock is operated. In the particular embodiment, the position sensor 32 adjoins, in the release position of the parking lock assembly 10 (please see Figure 3), a non-magnetic material 36 mounted into the actuation rod 24. In the interlocking position of the parking lock assembly 10 (please see Figure 4) the position sensor 32 adjoins the permanent magnet 34. Accordingly, the axial position of the actuation rod 24 can easily be determined for control and diagnostic purposes. The advantage of the presence of the non-magnetic material is that magnetizing the actuation rod 24, which is made from steel, is avoided.

It is however not necessary for the position sensor to be adjoined with the non-magnetic material in the release position. It could e.g. also be adjoined with the magnet part, while the interlocking position would adjoin a non-magnetic material.

In order to prevent rattling inside the actuation rod 24, there is a damper 38 arranged between the non-magnetic material 36 and the permanent magnet 34.

In an alternative embodiment, it is also possible that the position sensor 32 determines the axial position of the plunger 22.

An important feature of the electromechanical actuator 16 is that at least the second position is a stable position. In other words: the actuator 16 is locking in nature. When the actuator 16 has moved the rod 24 to preload the plunger spring 30, it has to keep the spring preloaded when the electrical signal is removed. This prevents a potentially unsafe condition which in the prior art requires additional redundancy measures. Should the spring 30 be preloaded, but the pawl 20 cannot engage in park-lock gear 20, and the electrical signal is then removed (e.g. when the driver removes the key and leaves the vehicle), the spring 30 tends to push back the actuator. If this was possible, the parking lock system would no longer be "armed". To prevent such a potential unsafe condition, the actuator 16 of the invention is stable in the second position, thereby holding the spring 30 in a compressed condition even if pawl 20 has not fully engaged into park-lock gear 18 at the time the electrical signal to the actuator 16 is switched off.

The electromechanical actuator 16 used here is a self-locking, linear actuator 16 acting in an axial direction and providing a self-locking function in the first actuator position and the second actuator position, wherein the self-locking function can be limited or unlimited in actuator force. The stable condition of the actuator 16 can be achieved with a worm drive which has such internal friction that the required locking characteristic is ensured. The stable condition can however also be achieved with other types of linear actuators, employing spindle drives, bi-stable solenoids, locking mechanisms of the type as used in ball pens, other appropriate linear drive units, etc.

The provision of a self-locking nature of the actuator 16 results in an important advantage of the subject locking mechanism as no additional or external redundancy measures are necessary for ensuring that the parking lock remains in its required state when the primary actuation source is lost (e.g. electromechanical state locking for a hydraulically actuated parking lock mechanism).

In the shown embodiment, the electromechanical actuator 16 and the actuation rod 24 are interconnected by a pivotable lever 39. Such interconnection allows for a compact construction of the parking lock assembly 10, especially in an axial direction. Further, the applied force as well as the travel of the actuation rod 24 and the linear actuator 16 are easily adjustable by the length of a lever arm. Alternatively, the actuation rod 24 can also be directly attached to the electromechanical actuator 16. This would simplify the construction of the parking lock assembly 10 but also require a larger axial installation space.

According to Figures 3 and 4, a manual override element 40 is associated with the actuation rod 24 to manually move the actuation rod 24 and thereby the plunger 22 from the interlocking position into the release position. In this case, the self-locking function of the electromechanical linear actuator 16 has to be limited in actuator force so that the self-locking resistance can be overcome by a manual axial force towards the release position.

Even though the manual override element 40 is here mounted on the actuation rod 24, it can be associated therewith in any other way, e.g. by indirectly mounting it thereon.

In case the self-locking function of the electromechanical linear actuator 16 is unlimited in actuator force or the locking force is too high to be overcome by a manual override action, even if assisted by suitable tooling, the manual override element 40 has to be mounted on the plunger 22 to manually move the plunger 22 from the interlocking position into the release position by compressing the spring element 30.

According to Figures 3 and 4 the automated transmission 12 for a vehicle includes the parking lock assembly 10 described above and a lubricated transmission area 44, wherein at least the parking lock mechanism 14 is arranged in the lubricated transmission area 44.

In Figures 3 and 4 the electromechanical actuator 16 is arranged outside the lubricated transmission area 44 and sealed against lubrication fluid of the lubricated transmission area 44 by a sealing ring 46. In alternative embodiments it is also possible that an appropriately constructed actuator 16 is also arranged inside the lubricated transmission area 44.

## Claims

1. Parking lock assembly for a vehicle transmission (12), comprising
a parking lock mechanism (14) associated to a transmission output shaft (15) and
a single electromechanical actuator (16) movable between a first actuator position and a second actuator position,
wherein the electromechanical actuator (16) in the first actuator position retains the parking lock mechanism (14) in a release position that allows the transmission output shaft (15) to rotate freely and in the second actuator position urges the parking lock mechanism (14) towards an interlocking position that blocks a rotation of the transmission output shaft (15), the second position of the actuator (16) being stable.

2. Parking lock assembly according to claim 1, **characterized in that** the electromechanical actuator (16) is a self-locking actuator providing a self-locking function in the second actuator position.

3. Parking lock assembly according to claim 2, **characterized in that** the electromechanical actuator (16) provides a self-locking function in the first actuator position as well.

4. Parking lock assembly according to one of the preceding claims, **characterized in that** the electromechanical actuator (16) is a linear actuator.

5. Parking lock assembly according to one of the preceding claims, **characterized in that** the electromechanical actuator (16) includes a worm drive.

6. Parking lock assembly according to one of claims 1 to 4, **characterized in that** the electromechanical actuator (16) includes a stepper motor or a spindle motor.

7. Parking lock assembly according to one of claims 1 to 4, **characterized in that** the electromechanical actuator (16) includes a bi-stable solenoid.

8. Parking lock assembly according to one of the preceding claims, further comprising
a park-lock gear (18) rigidly connected to the transmission output shaft (15) being rotatable around a transmission axis (A),
a pivotable pawl (20) that can engage with the park-lock gear (18),
a plunger (22) supporting the pivotable pawl (20), the plunger (22) being axially movable between a release position, in which the pawl (20) does not engage with the park-lock gear (18), and an interlocking position, in which the pawl (20) engages with the park-lock gear (18), as well as
an axially movable actuation rod (24) being slidably connected with the plunger (22), the actuation rod (24) being connected with the electromechanical actuator (16).

9. Parking lock assembly according to claim 8, **characterized in that** the plunger (22) is movable relative to the actuation rod (24) between two axial end-stops (26, 28), wherein a spring element (30) is provided, urging the plunger (22) towards one of the axial end-stops (26, 28).

10. Parking lock assembly according to claim 8 or 9, **characterized in that** the electromechanical actuator (16) is a linear actuator acting in an axial direction, wherein the electromechanical actuator (16) and the actuation rod (24) are interconnected by a pivotable lever (39).

11. Parking lock assembly according to one of claims 8 to 10, **characterized in that** a position sensor (32) is provided to determine the axial position of the actuation rod (24) or the plunger (22).

12. Parking lock assembly according to claim 11, **characterized in that** the position sensor (32) includes a permanent magnet (34) that is associated with the actuation rod (24) or the plunger (22).

13. Parking lock assembly according to one of claims 8 to 12, **characterized in that** a manual override element (40) is associated with the plunger (22) to manually move the plunger (22) from the interlocking position into the release position.

14. Parking lock assembly according to one of claims 8 to 12, **characterized in that** a manual override element (40) is associated with the actuation rod (24) to manually move the actuation rod (24) and thereby the plunger (22) from the interlocking position into the release position.

15. Transmission for vehicles, in particular automated transmission, comprising an output shaft (15) with a park-lock gear (18) and a parking lock assembly (10) according to any one of the preceding claims, wherein the parking lock mechanism (14) is arranged such that the pawl (20) can engage into park-lock gear (18).

16. The transmission of claim 15 wherein the parking lock assembly (10) is arranged in the lubricated transmission area (44).

17. The transmission of claim 15 wherein the electromechanical actuator (16) is arranged outside the lubricated transmission area (44) and sealed against lubrication fluid of the lubricated transmission area (44).
